# EUROPÄISCHE PATENTSCHRIFT

(11) **EP 0 480 213 B1**
(45) Veröffentlichungstag und Bekanntmachung des Hinweises auf die Patenterteilung: **23.08.1995**
(21) Anmeldenummer: 91115898.8
(22) Anmeldetag: 19.09.1991
(51) Int. Cl.: B29C 45/27

(54) **Heisskanalverteiler für Spritzgiesswerkzeuge**
Hot runner distributor for injection moulds
Distributeur de canaux chauds pour moules d'injection

(30) Priorität: 12.10.1990 DE 4032413
(43) Veröffentlichungstag der Anmeldung: 15.04.1992
(73) Patentinhaber: Wolff, Hans-Martin, CH-2825 Courchapoix (CH)
(72) Erfinder: Wolff, Hans-Martin, CH-2825 Courchapoix (CH)
(74) Vertreter: Katscher, Helmut, Dipl.-Ing.

(56) Entgegenhaltungen:
- AT-B- 286 607

## Beschreibung

Die Erfindung betrifft einen Heißkanalverteiler für Spritzgießwerkzeuge mit einem beheizbaren Verteilberblock, in dem Verteilerkanäle für die Kunststoffschmelze von einer zentralen Zufuhrstelle zu mehreren Anspritzdüsen führen, die in einer Düsenplatte eingesetzt sind, mit einer Kabelanschlußkammer, die an der Unterseite des Verteilerblocks zwischen diesem und der Düsenplatte ausgebildet und von einer Kammerwand umschlossen ist, an der ein Kabelrohrstutzen seitlich herausragt, durch den die Anschlußkabel für ein außerhalb der Verteilerkanäle im Verteilerkanal angeordnetes elektrisches Heizelement eingeführt sind.

Derartige Heißkanalverteiler dienen dazu, die an einer zentralen Zufuhrstelle zugeführte Kunststoffschmelze zu den einzelnen Anspritzdüsen zu leiten. Die aus thermoplastischem Kunststoff bestehende Kunststoffschmelze muß dabei auf ihrer Temperatur gehalten werden. Zu diesem Zweck wird der Verteilerblock ebenso wie die Anspritzdüsen elektrisch beheizt. Hierzu ist in den Verteilerblock ein elektrisches Heizelement eingebettet.

Bei einem bekannten Heißkanalverteiler (AT-B-286 607) ist das elektrische Heizelement unmittelbar im Verteilerkanal angeordnet; seine elektrischen Anschlüsse sind seitlich aus dem Verteilerblock herausgeführt. Dies macht eine aufwendige und störanfällige Abdichtung erforderlich.

Heißkanalverteiler der eingangs genannten Gattung sind allgemein bekannt.

Bei einer bekannten Ausführungsform eines solchen Heißkanalverteilers sind die Anschlüsse für dieses elektrische Heizelement an der Unterseite des Verteilerblocks herausgeführt. Kammerwände, die sich zwischen dem Verteilerblock und der Oberseite der Düsenplatte erstrecken, umschließen eine Kabelanschlußkammer, aus der seitlich über einen Kabelrohrstutzen die elektrischen Kabel herausgeführt sind.

Beim Betrieb von Spritzgießwerkzeugen kann es vorkommen, daß im Bereich der Anspritzdüsen Kunststoffschmelze in den Bereich zwischen der Düsenplatte und dem Verteilerblock austritt. Diese Kunststoffschmelze kann auch in die Kabelanschlußkammer eindringen und umschließt die aus dem Kabelrohrstutzen herausgeführten Anschlußkabel. Die erstarrte Kunststoffmasse muß beseitigt werden, bevor das Spritzgießwerkzeug und der Heißkanalverteiler wieder in Betrieb genommen werden können.

Dieser Vorgang ist nicht nur sehr arbeitsaufwendig, sondern führt auch häufig zu einer Beschädigung der Anschlußkabel für das elektrische Heizelement des Verteilerblocks und der Heizelemente selbst. Die dadurch notwendig werdenden zusätzlichen Reparaturarbeiten stellen einen erheblichen zusätzlichen Arbeitsaufwand und Zeitverlust dar.

Aufgabe der Erfindung ist es daher, einen Heißkanalverstärker der eingangs genannten Gattung so auszubilden, daß die im Falle einer Undichtheit in den Bereich zwischen dem Verteilerblock und der Düsenplatte austretende Kunststoffschmelze die elektrischen Heizelemente des Verteilerblocks und deren Anschlußkabel nicht beeinträchtigt.

Diese Aufgabe wird erfindungsgemäß dadurch gelöst, daß die Kabelanschlußkammer und mindestens ein Teil des anschließenden Kabelrohrstutzens mit einer temperaturbeständigen, elektrisch isolierenden Masse vergossen sind, und daß ein mit dem Kabelrohrstutzen dicht verbundenes flexibles Rohr bzw. Schlauch die Anschlußkabel umhüllt und mit einer Anschlußkupplung dicht verbunden ist.

Damit wird verhindert, daß im Falle einer Undichtheit Kunststoffschmelze an irgendeiner Stelle bis zu den elektrischen Anschlußkabeln bzw. den Heizelementen vordringen kann. Diese Anschlußkabel werden somit nicht von erstarrter Kunststoffmasse umschlossen.

Da die Funktionsfähigkeit des elektrischen Heizelements des Verteilerblocks auch in diesem Störungsfall erhalten bleibt, kann der Verteilerblock nach dem Abnehmen von der Düsenplatte so beheizt werden, daß die Kunststoffmasse im Kontaktbereich zum Verteilerblock und den daran angeschlossenen, ebenfalls erhitzten Teilen schmelzflüssig bleibt. Die in den übrigen, weiter vom Verteilerblock entfernten Bereichen ausgehärtete Kunststoffmasse kann dann verhältnismäßig einfach - gegebenenfalls nach Aufteilen in wenige größere Teile - vom Verteilerblock abgenommen werden, ohne daß die Anschlußkabel dabei beeinträchtigt werden. Die in einem Störungsfall erforderlichen Instandsetzungszeiten werden dadurch erheblich herabgesetzt.

Vorteilhafte Ausgestaltungen sind Gegenstand von Unteransprüchen.

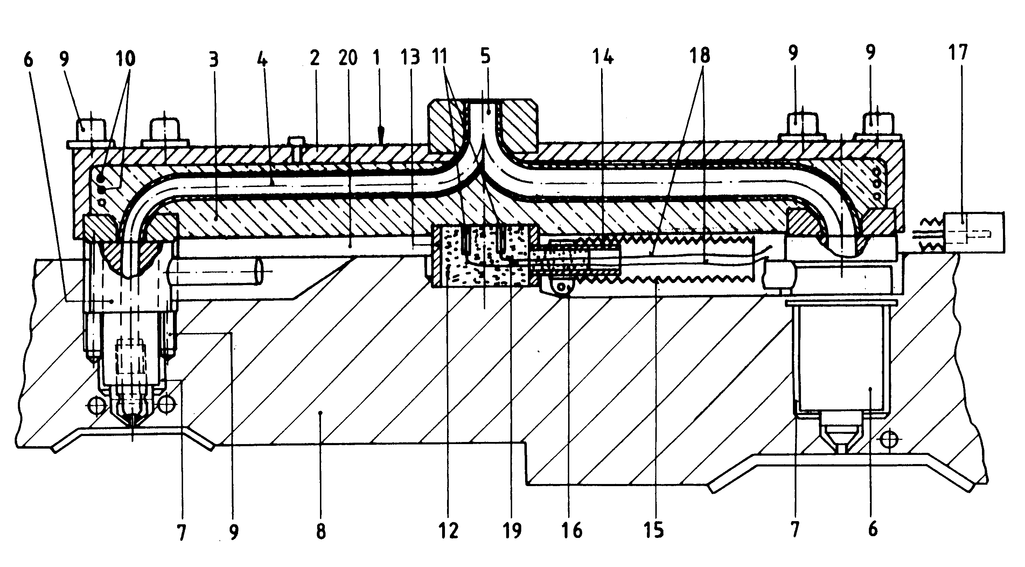

Die Erfindung wird nachfolgend an einem Ausführungsbeispiel näher erläutert, das in der Zeichnung dargestellt ist.

Die Zeichnung zeigt einen senkrechten Schnitt durch einen Heißkanalverteiler für ein Spritzgießwerkzeug mit angeschlossener Düsenplatte.

Ein Verteilerblock 1 weist in einem einseitig offenen Mantel 2 einen vergossenen Kern 3 aus Kupfer oder einer Kupferlegierung auf. In den Kupferkern 3 des Verteilerblocks 1 sind Verteilerkanäle 4 eingelegt, die bei dem dargestellten Ausführungsbeispiel aus korrosionsfestem Material bestehen. Die Verteilerkanäle 4 führen von einer zentralen Zufuhrstelle 5, an der die von beispielsweise einem Extruder kommende thermoplastische Kunststoffschmelze zugeführt wird, zu mehreren Anspritzdüsen 6, die an dem Verteilerblock 1 angeflanscht sind.

Die Anspritzdüsen 6 sind in Bohrungen 7 einer das Oberteil des Spritzgießwerkzeugs bildenden Düsenplatte 8 angeordnet. Der Verteilerblock 1 ist durch im Bereich der Anspritzdüsen 6 angeordnete Befestigungsschrauben 9 mit der Düsenplatte 8 verschraubt, wobei die Anspritzdüsen 6 zwischen dem Verteilerblock 1 und der Düsenplatte 8 eingespannt sind.

Die Anspritzdüsen 6 und der Verteilerblock 1 sind elektrisch beheizt, um die Kunststoffschmelze auf der für einen ordnungsgemäßen Spritzvorgang erforderlichen Temperatur zu halten. Hierzu ist in den Kupferkern 3 des Verteilerblocks 1 ein elektrisches Heizelement 10 eingebettet, das beispielsweise als Rohrheizkörper ausgeführt ist. Die Anschlüsse 11 dieses elektrischen Heizelements 10 münden an der Unterseite des Verteilerblocks 1 in einer dort zentrisch angeordneten Kabelanschlußkammer 12. Eine Kammerwand 13, die beispielsweise von einem Metallzylinder gebildet wird, umschließt die Kabelanschlußkammer 12 und erstreckt sich zwischen dem Verteilerblock 1 und der Düsenplatte 8.

Seitlich führt aus der Kabelanschlußkammer 12 ein in die Kammerwand 13 eingesetzter Kabelrohrstutzen 14 heraus, auf dem ein Ende eines flexiblen Rohres bzw. Schlauches 15 mittels einer Rohrschelle 16 dicht befestigt ist. Das flexible Rohr bzw. der Schlauch 15 besteht aus temperaturbeständigem Material, beispielsweise Metall. Das flexible Rohr bzw. der Schlauch 15 führt zu einer in der Zeichnung nur schematisch angedeuteten Anschlußkupplung 17, die seitlich am Werkzeug angebracht ist, und ist mit dieser ebenfalls dicht verbunden. Die Anschlußkupplung 17 ist außerhalb der Zone angeordnet, in die Kunststoffschmelze gelangen kann.

Die an den Anschlüssen 11 des elektrischen Heizelements angebrachten Anschlußkabel 18 sind aus der Kabelanschlußkammer 12 durch den seitlichen Kabelrohrstutzen 14 herausgeführt und verlaufen durch das flexible Rohr bzw. den Schlauch 15 zur Anschlußkupplung 17. Wie in der Zeichnung angedeutet ist, ist die Kabelanschlußkammer 12 und mindestens ein Teil des anschließenden Kabelrohrstutzens 14 mit einer temperaturbeständigen und elektrisch isolierenden Masse 19 vergossen, vorzugsweise einer Keramikmasse.

Wenn infolge einer Undichtheit im Bereich der Anspritzdüsen 6 Kunststoffschmelze in den Zwischenraum 20 zwischen dem Verteilerblock 1 und der Düsenplatte 8 eintritt, kann diese Kunststoffschmelze zwar die dort befindlichen Teile, insbesondere die Kammerwand 13 und das flexible Rohr bzw. den Schlauch 15 umschließen; sie kann jedoch nicht bis zu den Anschlußkabeln 18 und der Anschlußkupplung 17 vordringen. Selbst wenn die Kunststoffschmelze zwischen der Kammerwand 13 und der Düsenplatte 8 eindringt, kann sie die Kabelanschlußkammer 12 nicht ausfüllen, weil diese mit der Keramikmasse vergossen ist. Die eingedrungene und erstarrte Keramikmasse kann daher verhältnismäßig leicht entfernt werden, insbesondere weil die Funktionsfähigkeit des elektrischen Heizelements 10 des Verteilerblocks 1 erhalten beibt, so daß dieser beheizt werden kann, um ein Festhängen der Kunststoffmasse weitgehend zu verhindern. Es reicht aus, den Schlauch 15 an der Rohrschelle 16 zu lösen und auszutauschen; die Anschlußkabel 18 bleiben dabei unbeschädigt.

## Patentansprüche

1. Heißkanalverteiler für Spritzgießwerkzeuge mit einem beheizbaren Verteilberblock (1), in dem Verteilerkanäle (4) für die Kunststoffschmelze von einer zentralen Zufuhrstelle (5) zu mehreren Anspritzdüsen (6) führen, die in einer Düsenplatte (8) eingesetzt sind, mit einer Kabelanschlußkammer (12), die an der Unterseite des Verteilerblocks (1) zwischen diesem und der Düsenplatte (8) ausgebildet und von einer Kammerwand (13) umschlossen ist, an der ein Kabelrohrstutzen (14) seitlich herausragt, durch den die Anschlußkabel (18) für ein außerhalb der Verteilerkanäle (4) im Verteilerblock (1) angeordnetes elektrisches Heizelement (10) eingeführt sind, dadurch gekennzeichnet, daß die Kabelanschlußkammer (12) und mindestens ein Teil des anschließenden Kabelrohrstutzens (14) mit einer temperaturbeständigen, elektrisch isolierenden Masse (19) vergossen sind, und daß ein mit dem Kabelrohrstutzen (14) dicht verbundenes flexibles Rohr bzw. Schlauch (15) die Anschlußkabel (18) umhüllt und mit einer Anschlußkupplung (17) dicht verbunden ist.

2. Heißkanalverteiler nach Anspruch 1, dadurch gekennzeichnet, daß die temperaturbeständige Masse, mit der die Kabelanschlußkammer (12) und mindestens ein Teil des Kabelrohrstutzens (14) vergossen sind, eine Keramikmasse (19) ist.

3. Heißkanalverteiler nach Anspruch 1, dadurch gekennzeichnet, daß das flexible Rohr bzw. der Schlauch (15) mit dem Kabelanschlußstutzen (14) durch eine Rohrschelle (16) verbunden ist.

## Claims

1. Hot runner distributor for injection moulds having a manifold (1) which can be heated, in which distributor runners (4) for the liquid plastics lead to several nozzles (6) from a central feeding point (5), said nozzles being inserted in a cavity plate (8), with a cable-connection chamber (12) which is constructed on the underside of the manifold (1) between the latter and the cavity plate (8), and is enclosed by a chamber wall (13) on which a conduit pipe protrudes laterally, through which the connection cables (18) are introduced for an electrical heating element (10) located outside the distributor runners (4) in the manifold (1), characterized in that the cable-connection chambers (12) and at least one part of the connecting conduit pipe (14) are potted with a temperature-resistant, electrically-insulating compound (19), and that a flexible tube or hose (15) tightly joined to the conduit pipe (14) encloses the connection cables (18) and is tightly joined to a connection coupling (17).

2. Hot-runner distributor according to Claim 1, characterized in that the temperature-resistant compound with which the cable-connection chamber (12) and at least one part of the conduit pipe (14) are potted, is a ceramic compound.

3. Hot-runner distributor according to Claim 1, characterized in that the flexible pipe or the hose (15) is joined by a pipe-clip (16).

## Revendications

1. Distributeur de canaux chauffants pour moules à injection comportant un bloc de distribution chauffant (1), dans lequel des canaux de distribution (4) destinés à la masse fondue de matière plastique mènent d'un poste d'alimentation central (5) à plusieurs buses d'injection (6), qui sont montées dans une plaque porte-buses (8), une chambre de raccordement de câbles (12), qui est formée sur la partie inférieure du bloc de distribution (1) entre celui-ci et la plaque porte-buses et est entourée d'une paroi (13) sur laquelle fait saillie latéralement une conduite de câbles (14) à travers laquelle passent les câbles de raccordement (18) pour un élément chauffant électrique (10) agencé à l'extérieur des canaux de distribution (4) dans le bloc de distribution (1), caractérisé en ce que la chambre de raccordement de câbles (12) et au moins une partie de la conduite de câbles (14) qui lui est raccordée sont scellées par une masse (19) résistant à la chaleur et isolante électriquement, et en ce qu'un tuyau flexible (15) relié de manière étanche à la conduite de câbles (14) gains les câbles de raccordement (18) et est relié de manière étanche à un accouplement de raccordement (17).

2. Distributeur de canaux chauffants selon la revendication 1, caractérisé en ce que la masse résistant à la chaleur, par laquelle la chambre de raccordement de câbles (12) et au moins une partie de la conduite de câbles (14) sont scellées, est une masse de matière céramique (19).

3. Distributeur de canaux chauffants selon la revendication 1, caractérisé en ce que le tuyau flexible (15) est raccordé à la conduite de câbles (14) par une bride d'attache (16).
